# EUROPÄISCHE PATENTSCHRIFT

(11) **EP 3 718 199 B1**
(45) Veröffentlichungstag und Bekanntmachung des Hinweises auf die Patenterteilung: **12.06.2024**
(21) Anmeldenummer: 18829180.1
(22) Anmeldetag: 27.11.2018
(51) Int. Cl.: H02K 15/00

(54) **VERFAHREN ZUR HERSTELLUNG EINES HALBFABRIKATS EINES STATORS, SOWIE VORRICHTUNG ZUR HERSTELLUNG EINES HALBFABRIKATS EINES STATORS**
METHOD OF MANUFACTURING OF A SUBASSEMBLY OF A STATOR AND DEVICE FOR MANUFACTURING THE SAME
MÉTHODE DE FABRICATION D'UN SOUS-ENSEMBLE D'UN STATOR ET DISPOSITIF DE FABRICATION DUDIT SOUS-ENSEMBLE

(30) Priorität: 28.11.2017 AT 509852017
(43) Veröffentlichungstag der Anmeldung: 07.10.2020
(73) Patentinhaber: Miba Automation Systems Ges.m.b.H., 4663 Laakirchen (AT)
(72) Erfinder: FALKNER, Andreas, 4600 Wels (AT); PRIMORAC, Mladen-Mateo, 3100 St. Pölten (AT); SCHERRER, David, 4812 Altmünster (AT)
(74) Vertreter: Burger, Hannes
(86) Internationale Anmeldenummer: PCT/AT2018/060278
(87) Internationale Veröffentlichungsnummer: WO 2019/104362

(56) Entgegenhaltungen:
- DE-A1-102015 219 077
- DE-T2- 69 932 751
- JP-A- 2007 181 354
- JP-A- 2012 175 748
- JP-A- 2016 131 424

## Beschreibung

Die Erfindung betrifft ein Verfahren zur Herstellung eines Halbfabrikats eines Stators oder Rotors einer elektrischen Maschine, sowie eine Vorrichtung zum Durchführen des Verfahrens.

Die DE 10 2015 217 922 A1 offenbart ein Verfahren zum Herstellen eines Stators, wobei in Nuten eines Blechpakets jeweils ein elektrisches Leiterelement pro Schicht einer Zweischichtwicklung angeordnet wird. Hierzu ist vorgesehen, dass an einer Stirnseite des Blechpakets bei einer oder beiden der Schichten in einem Positionierprozess durch axiales Zusammenstecken eines Normalschrägungswerkzeugs mit axialen Leiterenden einiger der Leiterelemente und anschließendes relatives Drehen des Normalschrägungswerkzeugs bezüglich des Blechpakets sowie durch axiales Zusammenstecken eines Selektivschrägungswerkzeugs mit axialen Leiterenden der übrigen Leiterelemente, die Leiterenden aller Leiterelemente der Schicht derart relativ zueinander bewegt werden, dass sie eine für eine Verschaltung eines Teils der Leiterenden mit korrespondierenden Leiterenden der anderen Schicht vorgesehene relative Endstellung zueinander aufweisen.

Das Verfahren der DE 10 2015 217 922 A1 weist den Nachteil auf, dass die Leiterenden der einzelnen Schichten von Leiterelementen beim Verdrehen aneinander reiben, wodurch die Isolierung der Leiterelemente beschädigt werden kann.,

Aus der DE 10 2015 219 077 A1, der JP 2007 181354 A und der JP 2012 175748 A sind weitere Verfahren und Vorrichtungen zum Herstellen eines Stators bekannt.

Aufgabe der vorliegenden Erfindung war es, die Nachteile des Standes der Technik zu überwinden und ein Verfahren und eine Vorrichtung zur Verfügung zu stellen, mittels der ein Stator hergestellt werden kann, ohne dabei die Leiterelemente zu beschädigen.

Diese Aufgabe wird durch ein Verfahren und eine Vorrichtung gemäß den Ansprüchen gelöst.

Erfindungsgemäß ist ein Verfahren zur Herstellung eines Halbfabrikats eines Stators oder Rotors einer elektrischen Maschine vorgesehen. Das Verfahren umfasst die folgenden Verfahrensschritte:
- Bereitstellen eines im Wesentlichen hohlzylindrischen oder zylindrischen Blechpakets, wobei das Blechpaket eine Mehrzahl von in Umfangsrichtung verteilt angeordneten, sich zwischen einem ersten axialen Stirnende und einem zweiten axialen Stirnende des Blechpakets erstreckenden Aufnahmenuten aufweist;
- Bereitstellen einer Mehrzahl von stabförmigen oder spangenförmigen Leiterelementen;
- Einsetzen der Leiterelemente in zumindest einzelne der Aufnahmenuten, wobei die Leiterelemente in zueinander beabstandeten Aufnahmenuten in verschiedenen radialen Leiterelementschichten angeordnet werden und wobei die Leiterelemente derart in die Aufnahmenuten eingesetzt werden, dass zumindest eines der axialen Stirnenden des Blechpakets von Leiterelementüberständen der Leiterelemente in axialer Richtung überragt wird, wobei sich die Leiterelementüberstände von einem Blechpaketstirnendbereich über einen Mittelbereich zu einem Endbereich erstrecken;
- Biegen der Leiterelementüberstände in Radialrichtung;
- Biegen der Leiterelementüberstände der Leiterelemente in Umfangsrichtung, wobei die Leiterelementüberstände von Leiterelementen einer ersten radialen Leiterelementschicht in eine erste Umfangsrichtung gebogen werden und Leiterelementüberstände von Leiterelementen einer zweiten radialen Leiterelementschicht in die entgegengesetzte zweite Umfangsrichtung gebogen werden, sodass die Endbereiche von Leiterelementen, die in zueinander beabstandeten Aufnahmenuten angeordnet sind und in zueinander benachbarten Leiterelementschichten liegen, zusammengeführt werden.

Das erfindungsgemäße Verfahren weist den Vorteil auf, dass durch das Biegen der Leiterelementüberstände in Radialrichtung die Reibung der Leiterelemente aneinander beim anschließenden Biegen der Leiterelementüberstände in Umfangsrichtung vermindert werden kann. Dadurch kann erreicht werden, dass beim Biegen der Leiterelementüberstände in Umfangsrichtung nicht die Isolationsschicht abgeschabt wird. Dies bringt den Vorteil mit sich, dass die Qualität des Stators verbessert werden kann.

Weiters kann es zweckmäßig sein, wenn die Leiterelementüberstände in Radialrichtung bauchig gebogen werden, wobei die Leiterelementüberstände derart gebogen werden, dass am Ende des Biegevorganges der Endbereich der Leiterelementüberstände dem Zentrum des Blechpakets näher liegt als der Mittelbereich der Leiterelementüberstände. Mit andern Worten ausgedrückt werden die Leiterelementüberstände derart gebogen, dass sie eine bauchige Wölbung nach außen aufweisen. Durch diese Maßnahme kann die Form der Leiterelementüberstände an die Endform der Leiterelementüberstände nach dem Biegen in Umfangsrichtung angepasst werden, wodurch die Abscherung der Leiterelementüberstände verringert werden kann.

Erfindungsgemäß ist vorgesehen, dass der Mittelbereich der Leiterelemente radial nach außen gebogen wird. Dadurch kann eine besonders günstige Form zur Vermeidung von Abscherungen der Isolationsschicht erreicht werden.

Erfindungsgemäß ist vorgesehen, dass beim Biegen der Leiterelementüberstände in Radialrichtung ein radial gesehen inneres Biegewerkzeug gegen den Mittelbereich des Leiterelementüberstandes radial nach außen drückt und ein radial gesehen äußeres Biegewerkzeug zumindest gegen den Endbereich des Leiterelementes radial nach innen drückt. Von Vorteil ist hierbei, dass mittels dem inneren Biegewerkzeug und dem äußeren Biegewerkzeug die Biegung der Leiterelementüberstände in Radialrichtung erreicht werden kann.

Vorteilhaft ist auch eine Ausprägung, gemäß welcher vorgesehen sein kann, dass das innere Biegewerkzeug und das äußere Biegewerkzeug als Rollwerkzeug ausgebildet sind, welche in einem Abrollvorgang zumindest einmal um den Umfang des Blechpakets geführt werden. Ein derartiges Rollwerkzeug bringt den Vorteil mit sich, dass alle Leiterelementüberstände gleichmäßig gebogen werden können. Ein derartiges Rollwerkzeug kann außerdem einen einfachen Aufbau aufweisen und somit kostengünstig hergestellt werden.

Gemäß einer Weiterbildung ist es möglich, dass die Biegewerkzeuge mehrmals um den Umfang des Blechpakets geführt werden, wobei der Zustellvorgang des inneren Biegewerkzeugs und/oder des äußeren Biegewerkzeugs auf mehrere Umdrehungen aufgeteilt erfolgt. Durch diese Maßnahme kann die Biegung in mehreren Einzelstufen erfolgen, wodurch die Leiterelementüberstände pro Biegeschritt nicht übermäßig stark gebogen werden müssen.

Alternativ dazu kann vorgesehen sein, dass das innere Biegewerkzeug und das äußere Biegewerkzeug als in Umfangsrichtung segmentiertes Presswerkzeug ausgebildet sind, welche in Radialrichtung verschoben werden. Die einzelnen Segmente der Biegewerkzeug können hierbei gleichmäßig über den Umfang verteilt ausgebildet sein. Ein derartiges segmentiertes Presswerkzeug weist den Vorteil auf, dass der komplette Umbiegevorgang der Leiterelementüberstände in einem einzigen Arbeitsschritt durchgeführt werden kann und somit die Bearbeitungszeit verkürzt werden kann.

In wieder einer anderen Ausführungsvariante kann auch vorgesehen sein, dass nur ein einziges Paar aus äußerem Biegewerkzeug und innerem Biegewerkzeug als segmentiertes Presswerkzeug ausgebildet ist, welches sich über einen Teilabschnitt des Umfanges erstreckt. Das Blechpaket mit den darin aufgenommenen Leiterelementen kann somit sequentiell gebogen werden. Durch schrittweises Drehen des Blechpaketes und wiederholtem Biegen, können alle auf den Umfang verteilten Leiterelemente gebogen werden.

Darüber hinaus kann vorgesehen sein, dass das innere Biegewerkzeug eine Bombierung aufweist. Mittels der Bombierung kann die bauchige Verformung der Leiterelementüberstände erreicht werden.

Weiters kann vorgesehen sein, dass das äußere Biegewerkzeug eine mit der Bombierung korrespondierende Senke aufweist. Durch diese Maßnahme kann eine saubere Biegung der Leiterelementüberstände erreicht werden.

Besonders vorteilhaft ist es, wenn die bauchige Verformung der Leiterelementüberstände einen gleichmäßigen Übergangsradius aufweist.

Gemäß einer besonderen Ausprägung ist es möglich, dass mehrere in einer Aufnahmenut angeordnete Leiterelemente von verschiedenen radialen Leiterelementschichten gemeinsam in Radialrichtung gebogen werden, wobei das radial gesehen innere Biegewerkzeug gegen den Leiterelementüberstand des in der innersten radialen Leiterelementschicht angeordneten Leiterelementes drückt und das radial gesehen äußere Biegewerkzeug gegen den Leiterelementüberstand des in der äußersten radialen Leiterelementschicht angeordneten Leiterelementes drückt. Durch diese Maßnahme können mehrere in einer Aufnahmenut aufgenommene Leiterelemente, die in verschiedenen Leiterelementschichten angeordnet sind, gleichzeitig gebogen werden.

Entsprechend einer vorteilhaften Weiterbildung kann vorgesehen sein, dass die Leiterelementüberstände in Radialrichtung derart gebogen werden, dass sie während dem Biegen der Leiterelementüberstände in Umfangsrichtung möglichst wenig aneinander reiben. Durch diese Maßnahme kann erreicht werden, dass die Isolationsschicht während dem Biegen in Umfangsrichtung möglichst nicht beschädigt wird.

Insbesondere kann es vorteilhaft sein, wenn die Leiterelementüberstände in Radialrichtung derart bauchig gebogen werden, dass die Leiterelementüberstände nach dem Biegevorgang einen Radius aufweisen, der im Wesentlichen dem Radius der jeweiligen Leiterelementschicht entspricht in der sie angeordnet sind. Durch diese Maßnahme kann das Abschaben der Isolationsschicht überraschend gut vermieden werden.

Ferner kann vorgesehen sein, dass beim Biegen der Leiterelementüberstände in Radialrichtung zwischen den einzelnen Leiterelementen aus unterschiedlichen radialen Leiterelementschichten Abstandhalter angeordnet sind. Durch diese Maßnahme kann erreicht werden, dass nach dem Beigevorgang der Leiterelementüberstände in Radialrichtung die einzelnen Leiterelemente, welche in einer Aufnahmenut angeordnet sind, geringfügig zueinander beabstandet sind, wodurch der weitere Biegevorgang der Leiterelementüberstände in Umfangsrichtung erleichtert wird.

Darüber hinaus kann vorgesehen sein, dass die Leiterelemente derart im Blechpaket positioniert werden, dass an beiden axialen Stirnenden des Blechpaketes Leiterelementüberstände gebildet werden und dass die Leiterelementüberstände an beiden axialen Stirnenden des Blechpaketes in Radialrichtung gebogen werden.

Vorteilhaft ist auch eine Ausprägung, gemäß welcher vorgesehen sein kann, dass die Leiterelemente in zumindest sechs unterschiedlichen Leiterelementschichten angeordnet sind. Ein derart aufgebauter Stator ist zum Aufbringen großer Drehmomente geeignet.

Gemäß einer Weiterbildung ist es möglich, dass in zumindest einigen der Aufnahmenuten in jeder Leiterelementschicht ein Leiterelement angeordnet wird.

Darüber hinaus kann vorgesehen sein, dass die einzelnen Leiterelemente oder Gruppen von Leiterelementen nach dem Biegen in Radialrichtung aufgefächert und somit zueinander beabstandet werden. Dadurch kann das anschließende Biegen der Leiterelemente in Umfangsrichtung erleichtert werden.

Weiters kann vorgesehen sein, dass das Biegen der Leiterelemente in Umfangsrichtung und das Auffächern der Leiterelemente in einer Aufspannung erfolgt. Somit kann die Rüstzeit bzw. die Nebenzeit möglichst kurz gehalten werden. Insbesondere ist es denkbar, dass an einer Maschine das innere Biegewerkzeug zum radialen Biegen der Leiterelemente und das innere Auffächerwerkzeug zum Auffächern angeordnet sind.

Ferner kann es zweckmäßig sein, wenn die Leiterelemente derart in das Blechpaket eingesetzt werden, dass die Leiterelementüberstände der Leiterelemente der ersten radialen Leiterelementschicht eine geringere Erstreckung aufweisen, als die Leiterelementüberstände der Leiterelemente der zweiten radialen Leiterelementschicht, wobei durch die Leiterelemente eine Abstufung ausgebildet ist, wobei beim Auffächern ein inneres Auffächerwerkzeug an einem Absatz der Abstufung eingreift und gegen das äußere Leiterelement gedrückt wird, wodurch dieses nach außen gedrückt wird. Dadurch kann das Auffächern erleichtert werden, da der Absatz als Anschlag dienen kann.

Außerdem kann vorgesehen sein, dass die Leiterelementüberstände der Leiterelemente nach dem Auffächern mittels einem in Axialrichtung der Hauptachse wirkenden Endpositionierwerkzeug endpositioniert werden. Beim Endpositionieren können die Leiterelementüberstände für das anschließende Biegen in Umfangsrichtung in ihre exakte Position gebracht werden.

Weiters kann vorgesehen sein, dass nach dem Biegen in Umfangsrichtung die Leiterelementüberstände der Leiterelemente in Radialrichtung paarweise zusammengebogen werden.

Erfindungsgemäß ist eine Vorrichtung zur Herstellung eines Halbfabrikats eines Stators oder Rotors einer elektrischen Maschine vorgesehen. Die Vorrichtung umfasst eine Aufnahmevorrichtung zur Aufnahme eines hohlzylindrischen oder zylindrischen Blechpakets mit in Aufnahmenuten des Blechpakets angeordneten Leiterelementen, welche Leiterelementüberstände aufweisen. Außerdem ist ein radial gesehen inneres Biegewerkzeug und ein radial gesehen äu-ßeres Biegewerkzeug ausgebildet, wobei die Biegewerkzeuge zum Biegen der Leiterelementüberstände in Radialrichtung ausgebildet sind.

Darüber hinaus kann vorgesehen sein, dass das innere Biegewerkzeug und das äußere Biegewerkzeug als Rollwerkzeug ausgebildet sind.

Alternativ dazu kann vorgesehen sein, dass das innere Biegewerkzeug und das äußere Biegewerkzeug als in Umfangsrichtung segmentiertes Presswerkzeug ausgebildet sind, welche in radialer Richtung verschiebbar sind.

Wenn in einer Aufnahmenut zwei Leiterelemente aufgenommen sind, wird das innenliegende Leiterelement als inneres Leiterelement und das außenliegende Leiterelement als äußeres Leiterelement bezeichnet.

Weiters kann vorgesehen sein, dass die Leiterelementüberstände der Leiterelemente über deren Längserstreckung gleichmäßig in Radialrichtung gebogen werden.

Weiters kann vorgesehen sein, dass das innere Biegewerkzeug und/oder das äußere Biegewerkzeug an der Anlagefläche eine elastische Beschichtung aufweist. Durch diese Maßnahme können die Leiterelemente vor übermäßiger mechanischer Belastung geschützt werden. Insbesondere kann dadurch vermieden werden, dass eine an den Leiterelementen angeordnete Isolationsschicht durch die Biegewerkzeuge beschädigt wird.

Wenn in einer Aufnahmenut mehrere Leiterelemente, beispielsweise 4, 6, 8 oder 10 Leiterelemente aufgenommen sind, so wird jeweils von einem Leiterelementpaar das innenliegende Leiterelement als inneres Leiterelement und das außenliegende Leiterelement als äußeres Leiterelement bezeichnet. Da die Leiterelemente vorzugsweise paarweise in der Aufnahmenut aufgenommen sind und deswegen eine gerade Anzahl von Leiterelementschichten vorhanden ist, wird das dem Zentrum nächstliegende Leiterelement als inneres Leiterelement und das am weitest außenliegende Leiterelement als äußeres Leiterelement bezeichnet.

Weiters kann vorgesehen sein, dass die Leiterelementüberstände auf einer Länge zwischen 50% und 100% der Gesamtlänge der Leiterelementüberstände gebogen werden.

Da sich die Bezeichnung erster Leiterelementüberstand und zweiter Leiterelementüberstand auf die Seite des Blechpakets bezieht, kann das äußere Leiterelement einen ersten Leiterelementüberstand und einen zweiten Leiterelementüberstand aufweisen.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines Stators;
- Fig. 2: der Verfahrensablauf zur Herstellung eines Stators;
- Fig. 3: eine Stirnansicht eines Blechpakets eines Stators mit den darin aufgenommenen Leiterelementen und Rollen zum Biegen der Leiterelementüberstände;
- Fig. 4: eine Schnittdarstellung eines Stators gemäß der Schnittlinie IV-IV aus Fig. 3;
- Fig. 5: eine Stirnansicht eines Blechpakets eines Stators mit den darin aufgenommenen Leiterelementen und einem segmentierten Biegewerkzeug zum Biegen der Leiterelementüberstände;
- Fig. 6: eine Stirnansicht eines Blechpakets eines Stators mit den darin aufgenommenen Leiterelementen und einem weiteren Ausführungsbeispiel eines segmentierten Biegewerkzeuges zum Biegen der Leiterelementüberstände;
- Fig. 7: eine Schnittdarstellung eines weiteren Ausführungsbeispiels des Stators gemäß der Schnittlinie IV-IV aus Fig. 3;
- Fig. 8: eine Vorrichtung zum gleichzeitigen radialen Biegen der ersten und der zweiten Leiterelementüberstände;
- Fig. 9: eine schematische Darstellung des Auffächervorganges;
- Fig. 10: eine schematische Darstellung des Längspositioniervorganges.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

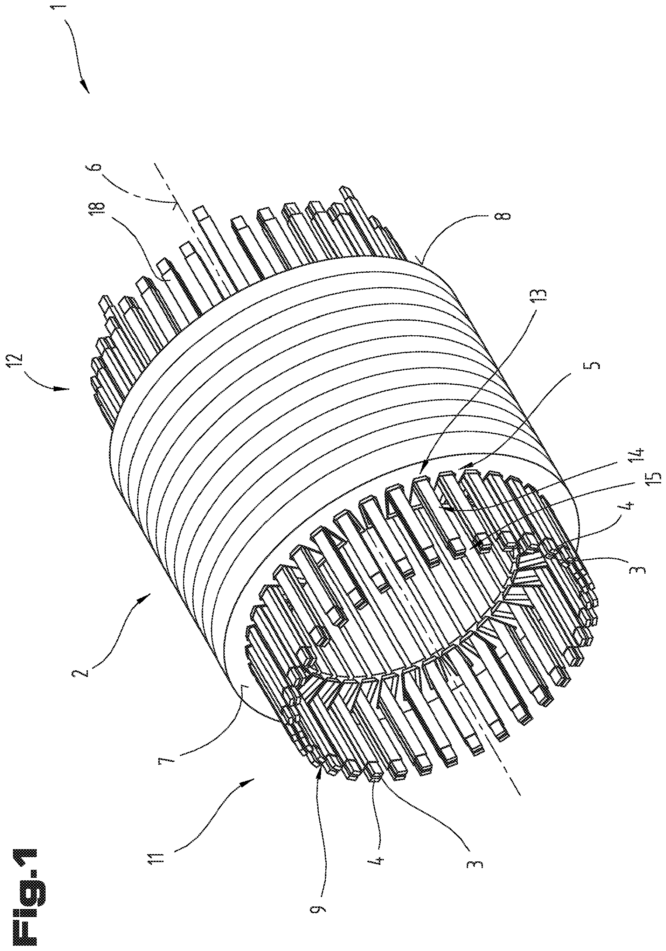

In der Fig. 1 ist eine mögliche Ausbildung eines Stators 1 zur Bildung einer nicht näher dargestellten elektrischen Maschine gezeigt. Es wäre aber auch möglich, die nachfolgende Beschreibung und Ausführung auch bei einem Rotor zur Bildung einer elektrischen Maschine in dazu analoger Weise anzuwenden und durchzuführen. Die nachfolgende Beschreibung ist nur auf einen Stator 1 bezogen, kann aber auch einen Rotor betreffen

Die Montage und eine Vielzahl von Fertigungsschritten des Stators 1 können bevorzugt in einer komplexen Fertigungsanlage automatisiert in mehreren Fertigungsstationen zumeist auch vollautomatisch durchgeführt werden.

Grundsätzlich umfasst der Stator 1 ein Blechpaket 2, sowie eine Vielzahl an darin aufzunehmenden Leiterelementen 3, 4 zur Bildung von elektrischen Spulen bzw. Wicklungen und zum Erzeugen eines magnetischen Drehfeldes infolge einer Strombeaufschlagung der Spulen bzw. Wicklungen.

Bei dem vorliegenden Ausführungsbeispiel aus Fig. 1 sind die einzelnen Leiterelemente 3, 4 in ihrer unverformten Ausgangslage gezeigt, in welcher sie als gerade Stäbe ausgebildet sind.

Die Stäbe weisen üblicher Weise einen rechteckigen Querschnitt bis hin zu einem quadratischen Querschnitt sowie eine Längserstreckung auf und sind aus einem elektrisch leitenden Werkstoff gebildet. Zumeist handelt es sich dabei um einen Kupferwerkstoff. Daher können diese auch als Profilstäbe bezeichnet werden und die damit aufgebaute elektrische Wicklung kann als Stabwicklung bezeichnet werden.

Zur Bildung von elektrischen Spulen bzw. von daraus gebildeten Wicklungen sind im Blechpaket 2 über den Umfang verteilt eine Vielzahl von Aufnahmenuten 5 angeordnet oder ausgebildet, in welchen jeweils zumindest eines der Leiterelemente 3, 4, bevorzugt aber zumindest zwei der Leiterelemente 3, 4, aufgenommen oder angeordnet ist oder sind. Die Aufnahmenuten 5 können sich in Axialrichtung des Blechpakets 2 in einer parallelen Ausrichtung bezüglich einer vom Blechpaket 2 definierten Hauptachse 6 erstrecken. Es wäre aber auch möglich, eine bezüglich der Hauptachse 6 nicht parallele Anordnung der Aufnahmenuten 5 mit den darin aufzunehmenden Leiterelementen 3, 4 zu wählen. Jedenfalls erstrecken sich die Aufnahmenuten 5 in Richtung der Hauptachse 6 jeweils zwischen dem ersten Stirnende 7 und dem davon beabstandet angeordneten zweiten Stirnende 8 des Blechpakets 2.

Die Aufnahmenuten 5 weisen jeweils einen an die Querschnittsabmessung des Leiterelements 3, 4 oder bei mehreren in der gleichen Aufnahmenut 5 aufgenommen Leiterelementen 3, 4 jeweils einen an die Querschnittsabmessungen daran angepassten Aufnahmenut-Querschnitt auf.

Das Blechpaket 2 ist in Richtung seiner Hauptachse 6 durch die erste Stirnfläche an seinem ersten Stirnende 7 und durch die davon beabstandet angeordnete zweite Stirnfläche an seinem zweiten Stirnende 8 begrenzt. Bevorzugt sind die beiden Stirnflächen bzw. Stirnenden 7, 8 zueinander parallel sowie in einer in Normalrichtung bezüglich der Hauptachse 6 ausgerichteten Ebene verlaufend angeordnet. Im vorliegenden Ausführungsbeispiel des Stators 1 einer elektrischen Maschine bildet das Blechpaket 2 einen Hohlzylinder mit einer Innenfläche und einer Außenfläche aus.

Wie vorstehend bereits ausgeführt, ist in jeder der Aufnahmenuten 5 zumindest eines der Leiterelemente 3, 4 angeordnet. Es können aber auch mehrere, insbesondere zwei, drei, vier, fünf, sechs oder auch mehr Leiterelemente 3, 4 pro Aufnahmenut 5 vorgesehen sein. Insbesondere können auch acht, zehn, zwölf oder mehr Leiterelemente 3, 4 in jeder der Aufnahmenuten 5 aufgenommen sein. Insbesondere ist jedoch vorgesehen, dass ein inneres Leiterelement 3 und ein äußeres Leiterelement 4 vorhanden sind.

Die in radialer Richtung innenliegend angeordneten Leiterelemente 3 bilden eine erste Leiterelementschicht 9 und die in radialer Richtung außenliegend angeordneten Leiterelemente 4 eine zweite Leiterelementschicht 10 aus. Natürlich können entsprechend den obigen Ausführungen auch weitere Leiterelementschichten vorgesehen sein. Im Ausführungsbeispiel nach Fig. 1 sind der Übersichtlichkeit halber nur die innenliegend angeordneten Leiterelemente 3 und die außenliegend angeordneten Leiterelemente 4 eines ersten Leiterelementpaares dargestellt.

Die stabförmig ausgebildeten, im Ursprungszustand vorzugsweise geradlinig verlaufenden Leiterelemente 3 und 4 sind vorzugsweise derart im Blechpaket 2 angeordnet, dass sie einen ersten Leiterelementüberstand 11 aufweisen, der gegenüber dem ersten Stirnende 7 des Blechpakets 2 vorsteht und einen zweiten Leiterelementüberstand 12 aufweisen, der gegenüber dem zweiten Stirnende 8 des Blechpakets 2 vorsteht.

Die einzelnen Leiterelementüberstände 11, 12 erstrecken sich jeweils von einem Blechpaketstirnendbereich 13, welcher im Bereich des Stirnendes 7, 8 des Blechpakets 2 liegt, über einen Mittelbereich 14 hin zu einem Endbereich 15. Der Endbereich 15 des Leiterelementüberstandes 11, 12 ist auch gleichzeitig der Endbereich 15 des Leiterelementes 3,4.

Die im Blechpaket 2 in den einzelnen Aufnahmenuten 5 aufgenommenen, im Ausgangszustand noch unverformten, Leiterelemente 3, 4 können durch gerade Stäbe gebildet sein, welche in einem nachfolgenden Fertigungsschritt im Bereich des ersten Leiterelementüberstandes 11 und/oder des zweiten Leiterelementüberstandes 12 gegeneinander verschränkt bzw. in einer Umfangsrichtung 16, 17 des Blechpakets 2 gebogen werden. Anschließend werden Endbereiche 15 der ersten oder inneren Leiterelementschicht 9 selektiv mit dazu korrespondierenden Endbereichen 15 der zweiten oder äußeren Leiterelementschicht 10 elektrisch leitend verbunden. Dies kann sowohl bei den ersten Leiterelementüberständen 11 und/oder bei den zweiten Leiterelementüberständen 12 erfolgen.

In einer Alternativvariante kann auch vorgesehen sein, dass die Leiterelemente 3, 4 in Form von Hairpins ausgebildet sind, welche schon vor dem Einsetzen in das Blechpaket 2 an einem Leiterelementüberstand 12 miteinander verschränkt sind bzw. eine entsprechende Biegung aufweisen.

In bekannter Weise können die Leiterelemente 3, 4 mit Ausnahme von den Endbereichen 15 mit einer elektrischen Isolationsschicht 18 versehen bzw. umgeben sein. Diese Isolationsschicht 18 an der Mantelfläche der stabförmigen Leiterelemente 3, 4 ist vorzugsweise aus Kunststoff gebildet und kann in einem vorausgegangenen Lackier- bzw. Tauchprozess aufgebracht worden sein.

Beim Biegen der Leiterelementüberstände 11, 12 in Umfangsrichtung 16, 17 ist es wichtig, dass die Isolationsschicht 18 nicht durch Aneinanderreiben der einzelnen Leiterelemente 3, 4 aus unterschiedlichen Leiterelementschichten 9, 10 abgeschabt wird.

Die Beschickung oder das Einbringen der einzelnen Leiterelemente 3, 4 in die jeweiligen Aufnahmenuten 5 kann schrittweise oder taktweise erfolgen. Da die typischerweise noch unverformten Leiterelemente 3, 4 längsverschieblich in den jeweiligen Aufnahmenuten 5 aufgenommen sind, ist bei der Übergabe an eine nachfolgende Bearbeitungsstation oder Fertigungsstation auf die relative Lage der Leiterelemente 3, 4 bezüglich des Blechpakets 2 Bedacht zu nehmen oder eine vordefinierte relative Lage der Leiterelemente 3, 4 gegenüber dem Blechpaket 2 sicher zu stellen.

In einem bevorzugt vor der Übergabe oder Weitergabe an die nachfolgende Bearbeitungsstation oder Fertigungsstation durchzuführenden Positionierschritt können die Leiterelemente 3, 4 in Axialrichtung bezüglich einer der Stirnenden 7, 8 noch ausgerichtet werden. Dies kann z.B. dadurch erfolgen, dass das Blechpaket 2 mitsamt den darin bereits aufgenommenen Leiterelementen 3, 4 von seiner bevorzugt horizontalen Beschickungslage in eine vertikale Positionierlage, bei welcher die Hauptachse 6 des Blechpakets 2 eine vertikale Längsausrichtung aufweist, umgelegt wird. Das Blechpaket 2 kann auf einem Positionieransatz abgestützt werden, wobei die Leiterelemente 3, 4 bevorzugt schwerkraftbedingt in den einzelnen Aufnahmenuten 5 bis zu einem bevorzugt umlaufend ausgebildeten Positionierelement mit einem ihrer Endbereiche 15 zur Anlage kommen. Der Abstand zwischen dem Positionieransatz und dem Positionierelement ist entsprechend dem benötigten bzw. vorgegebenen Überstand der Endbereiche 15 der Leiterelemente 3, 4 über eines der Stirnenden 7, 8 des Blechpakets 2 zu wählen. Diese Transportstellung kann z.B. auf einem zwischen einzelnen der Arbeitsstationen verfahrbaren Werkstückträger eingenommen werden.

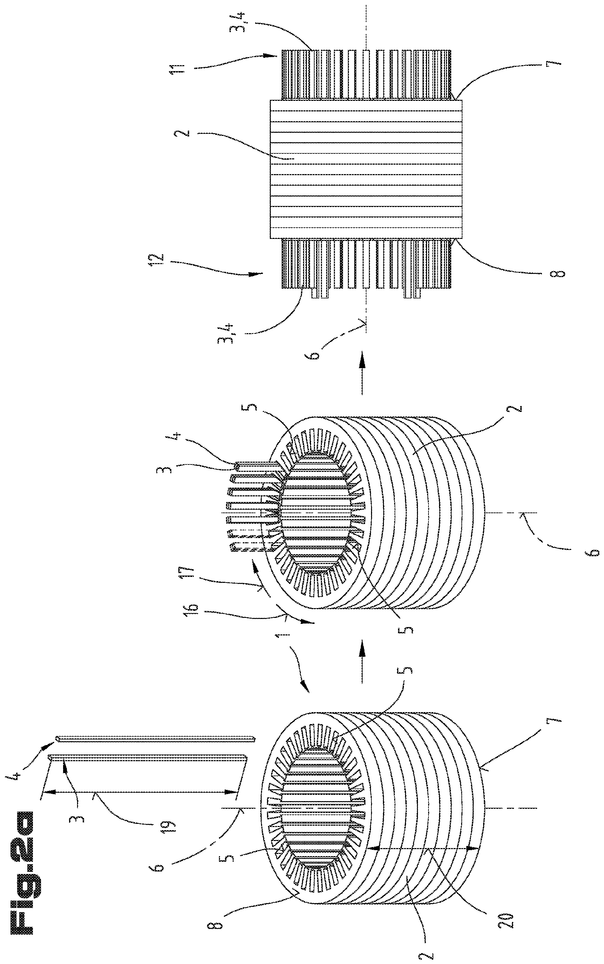

Mit den nachfolgend angeführten Verfahrensschritten, wie sie auch in den Figuren 2a bis 2c schematisch dargestellt wurden, kann eine automatisierte oder zumindest teilweise automatisierte Herstellung zumindest eines Halbfabrikats des gattungsgemäßen Stators 1 bzw. Rotors für elektrische Maschinen erzielt werden.

In einem initialen Schritt wird ein im Wesentlichen hohlzylindrisches Blechpaket 2 bereitgestellt. Dieses Blechpaket 2 weist eine Mehrzahl von in Kreisumfangsrichtung verteilt angeordneten, sich zwischen dem ersten axialen Stirnende 7 und dem zweiten axialen Stirnende 8 des Blechpaketes 2 erstreckender Aufnahmenuten 5 für Leitungsabschnitte einer herzustellenden elektrischen Wicklung auf. Bei der dargestellten Ausführungsform mit einem feststehenden Stator 1 ist das Blechpaket 2 als hohlzylindrischer Körper ausgeführt. Allerdings kann auch ein Stator mit im Wesentlichen zylindrischer Körperform ausgeführt sein, wobei die entsprechende elektrische Maschine bzw. der demgemäße Motor sodann als sogenannter Außenläufermotor mit einem hohlzylindrischen Rotor ausgeführt ist.

Zudem wird eine Mehrzahl von stabförmigen Leiterelementen 3, 4 bereitgestellt, welche im Ausgangs- bzw. Urzustand, insbesondere in ihrem Einfügezustand gegenüber dem Blechpaket 2, eine geradlinige bzw. überwiegend geradlinige Form, insbesondere eine Stabform aufweisen. Diese stabförmigen Leiterelemente 3, 4 können dabei in Abhängigkeit des Verlaufes der Aufnahmenuten 5 auch helixartig bzw. schraubkonturförmig ausgeführt sein, was insbesondere bei sogenannten schräggenuteten Blechpaketen 2 bzw. Statoren 1 oder Rotoren der Fall ist. Die stabförmigen Leiterelemente 3, 4 weisen jeweils ein erstes Längsende 11, 12 und ein distal gegenüberliegendes, zweites Längsende 13, 14 auf. Diese Mehrzahl an stabförmigen Leiterelemente 3, 4 ist durch vordefinierte elektrische Verschaltungen bzw. Verbindungen zur Bildung der elektrischen Wicklung des Stators 1 vorgesehen. Eine Länge 19 der stabförmigen Leiterelemente 3, 4 ist dabei größer als eine axiale Länge 20 des Blechpakets 2.

In einem vorzugsweise automatisiert ausgeführten Verfahrensschritt werden die stabförmigen Leiterelemente 3, 4 paarweise oder auch gruppeweise, insbesondere in einer mehrfachen Anzahl von zwei Stück, in jede der Aufnahmenuten 5 eingebracht, wie in Fig. 2a ersichtlich ist. Der Einfachheit wegen wurden nur einzelne in das Blechpaket 2 eingeschobene Leiterelemente 3, 4 dargestellt. Das Einbringen der ungebogenen, stabförmigen Leiterelemente 3, 4 in jede der Aufnahmenuten erfolgt dabei vorzugsweise ausgehend vom ersten oder zweiten axialen Stirnende 7, 8 des Blechpakets 2.

In einem nachfolgenden Verfahrensschritt werden die in die Aufnahmenuten 5 eingebrachten, stabförmigen Leiterelemente 3, 4 derart positioniert, dass deren erste und zweite Endbereiche 15 gegenüber dem ersten und zweiten Stirnende 7, 8 des Blechpakets 2 jeweils vorstehen und somit einen ersten Leiterelementüberstand 11 und einen zweiten Leiterelementüberstand 12 bilden. Einzelne Leiterelemente 3, 4 können dabei eine größere Länge 19 aufweisen, als andere Leiterelemente 3, 4 innerhalb der zu bildenden elektrischen Wicklung. Die vergleichsweise länger ausführen Leiterelemente 3, 4 können dabei insbesondere zur Bildung von Wicklungsanschlüssen bzw. Anschlusszonen vorgesehen sein.

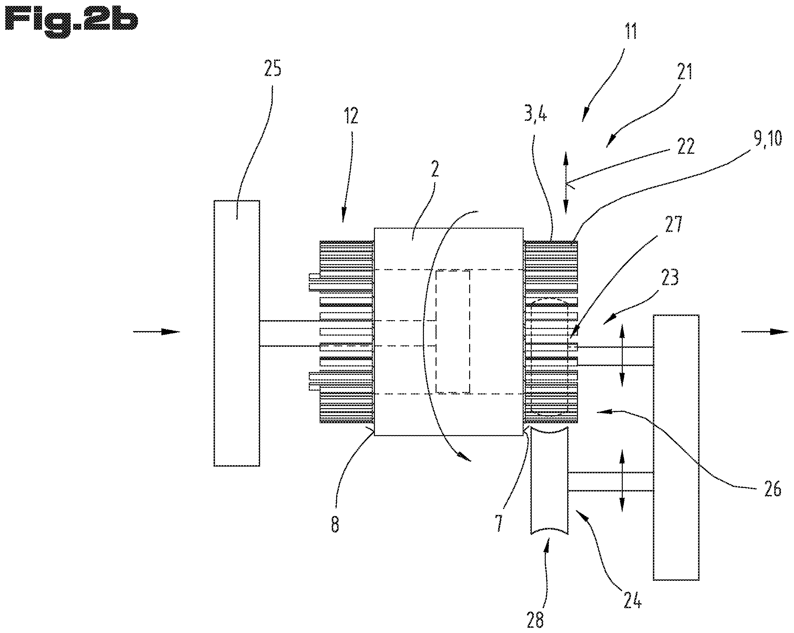

In einem weiteren Verfahrensschritt, welcher in Fig. 2b dargestellt ist, wird das Blechpaket 2 mit den darin aufgenommenen Leiterelementen 3, 4 einer Vorrichtung 21 zugeführt, in welcher die Leiterelementüberstände 11, 12 in Radialrichtung 22 gebogen werden. Hierzu ist ein inneres Biegewerkzeug 23 vorgesehen, welches gegen das innere Leiterelement 3 drückt und ein äußeres Biegewerkzeug 24, welches gegen das äußere Leiterelement 4 drückt.

Weiters kann eine Aufnahmevorrichtung 25 vorgesehen sein, welche zur Aufnahme des Blechpaketes 2 dient. Die Aufnahmevorrichtung 25 kann insbesondere als Spreizdorn ausgeführt sein, welcher in das Innere des Blechpaketes 2 geführt wird und das Blechpaket 2 klemmen kann.

Alternativ dazu kann vorgesehen sein, dass die Aufnahmevorrichtung 25 Klemmbacken umfasst, die das Blechpaket 2 an dessen Außenumfang klemmen.

Im Ausführungsbeispiel nach Fig. 2b ist das innere Biegewerkzeug 23 sowie das äußere Biegewerkzeug 24 als Rollwerkzeug 26 ausgebildet, welches zum Biegen der Leiterelementüberstände 11, 12 in Radialrichtung ausgebildet ist. Insbesondere kann vorgesehen sein, dass das innere Biegewerkzeug 23 eine Bombierung 27 aufweist und das äußere Biegewerkzeug 24 eine Senke 28 aufweist. Die Bombierung 27 und die Senke 28 sind aneinander angepasst.

Zum Biegen der Leiterelementüberstände 11, 12 in Radialrichtung 22 wird das innere Biegewerkzeug 23 in Richtung zum inneren Leiterelement 3 bzw. zum Innersten der inneren Leiterelemente 3 zugestellt und gleichzeitig das äußere Biegewerkzeug 24 in Richtung zum äußeren Leiterelement 4 bzw. zum Äußersten der äußeren der Leiterelemente 4 zugestellt. Nach Anlage des inneren Biegewerkzeuges 23 am inneren Leiterelement 3 und des äußeren Biegewerkzeuges 24 am äußeren Leiterelement 4 wird bei einer weiteren Zustellung der Biegewerkzeuge 23, 24 der Leiterelementüberstand 11, 12 gebogen. Anschließend kann das Blechpaket 2 mittels der Aufnahmevorrichtung 25 um seine Hauptachse 6 rotiert werden, sodass alle über den Umfang verteilt angeordneten Leiterelemente 3, 4 in Radialrichtung 22 gebogen werden. Insbesondere kann vorgesehen sein, dass nach dem Beenden einer Umdrehung das innere Biegewerkzeug 23 bzw. das äußere Biegewerkzeug 24 weiter zugestellt wird, sodass die Gesamtzustellung auf mehrere Umdrehungen aufgeteilt erfolgt.

In einer alternativen Ausführungsvariante kann auch vorgesehen sein, dass das Blechpaket 2 mittels der Aufnahmevorrichtung 25 still gehalten wird und die als Rollwerkzeug 26 ausgebildeten Biegewerkzeuge 23, 24 um den Umfang des Blechpaketes 2 geführt werden. In wieder einer anderen Ausführungsvariante ist es auch denkbar, dass entsprechend einer Kombination der beiden obig beschriebenen Ausführungsvarianten sowohl das Blechpaket 2 als auch die Biegewerkzeuge 23, 24 bewegt werden.

Wie aus Fig. 2b ersichtlich, kann vorgesehen sein, dass in einem ersten Schritt nur die ersten Leiterelementüberstände 11 der Leiterelemente 3, 4 in Radialrichtung 22 gebogen werden. Anschließend kann der Stator 1 gewendet werden, sodass die zweiten Leiterelementüberstände 12 der Leiterelemente 3, 4 in Radialrichtung 22 gebogen werden können.

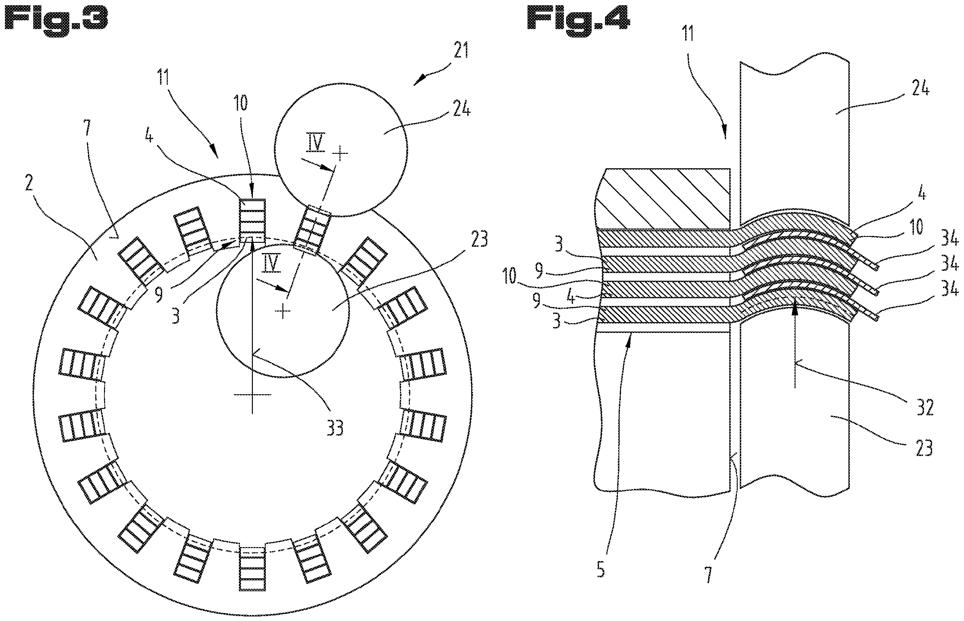

In den Figuren 3 und 4 wird die Vorrichtung 21 bzw. der Biegevorgang in Radialrichtung 22 genauer beschrieben.

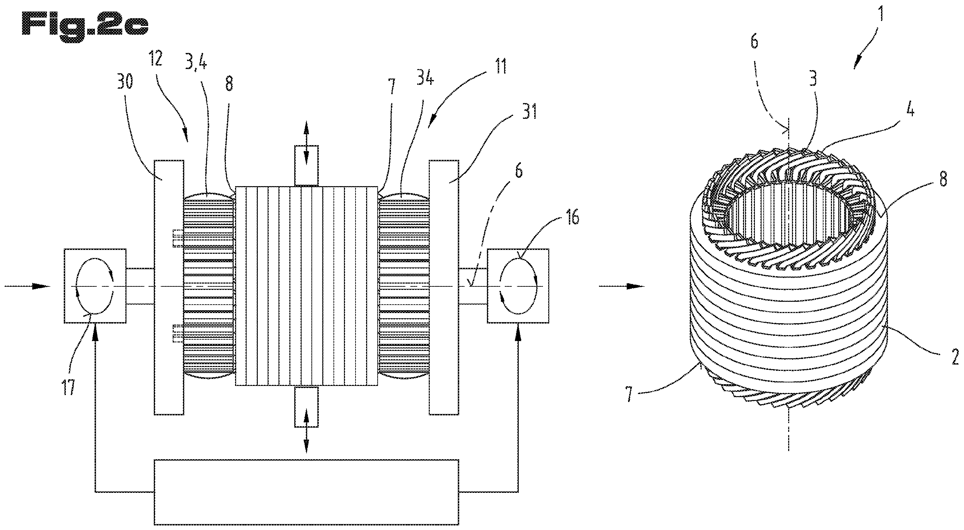

Nach dem Biegen der Leiterelemente 3, 4 in Radialrichtung 22 erfolgt, wie aus Fig. 2c ersichtlich, ein definiertes Biegen bzw. Kröpfen der ersten und zweiten Leiterelementüberstände 11, 12 der stabförmigen Leiterelemente 3, 4 in Umfangsrichtung 16, 17 des Blechpakets 2. Insbesondere werden die ersten Leiterelementüberstände 11 der inneren Leiterelemente 3 in einer ersten Umfangsrichtung 16 gebogen und die ersten Leiterelementüberstände 11 der äußeren Leiterelemente 4 in einer zweiten Umfangsrichtung 17 gebogen werden. Die zweiten Leiterelementüberstände 12 können gegengleich gebogen werden.

Entsprechend einer zweckmäßigen Maßnahme ist dabei im Zuge dieses Biege- bzw. Umformprozesses vorgesehen, dass zumindest ein erstes Drehwerkzeug 30 an den ersten Leiterelementüberständen 11 der Leiterelemente 3, 4 angebracht bzw. angesetzt wird. Zusätzlich, insbesondere im Wesentlichen zeitgleich oder zeitlich geringfügig versetzt, wird zumindest ein zweites Drehwerkzeug 31 an den zweiten Leiterelementüberständen 12 der Leiterelemente 3, 4 angebracht bzw. angesetzt. Das zumindest eine erste Drehwerkzeug 30 und das zumindest eine zweite Drehwerkzeug 31 können dabei in an sich bekannter Weise formschlüssig wirkende Aufnahmetaschen für die ersten Leiterelementüberstände 11 bzw. für die zweiten Leiterelementüberstände 12 aufweisen. Es ist aber ebenso möglich, dass die Drehwerkzeuge 30, 31 primär auf einem Reibschlussprinzip basieren bzw. auf einem sonstigen Mitnehmerprinzip zur kontrollierten, plastischen Umformung der Leiterelemente 3, 4 beruhen.

Insbesondere kann vorgesehen sein, dass diese Biegung der ersten Leiterelementüberstände 11 bzw. der zweiten Leiterelementüberstände 12 in Umfangsrichtung 16,17 auf derselben Vorrichtung 21 durchgeführt wird, wie die Biegung der Leiterelementüberstände 11, 12 in Radialrichtung 22.

Die Aufnahmevorrichtung 25 kann dabei gemäß beliebigen aus dem Stand der Technik bekannten Mechanismen ausgeführt sein. Beispielsweise kann die Aufnahmevorrichtung 25 in Art eines Zangengreifers, eines Mehrfach-Fingergreifers, oder sogar in Art eines Magnetgreifers bzw. einer elektromagnetischen Aufnahmevorrichtung ausgeführt sein.

Das zumindest eine erste und das zumindest eine zweite Drehwerkzeug 30, 31 können dabei mehrteilig ausgeführt sein, insbesondere konzentrisch ineinander gesetzte, unabhängig voneinander drehbewegliche Teilwerkzeuge umfassen. Diese Teilwerkzeuge je Drehwerkzeug 30, 31 an den axialen Stirnenden 7, 8 des Blechpakets 2 werden dabei in gegenläufige Richtungen verdreht, wie dies aus dem Stand der Technik bekannt ist, um benachbarte Leiterelementschichten 9, 10 von Leiterelementüberständen 11, 12 in gegenläufige Umfangsrichtungen 16, 17 zu biegen. Durch die gegenläufige Drehbewegung von mehreren Teilwerkzeugen je Drehwerkzeug 30, 31 kann eine verschränkte Umformung der Leiterelementüberstände 11, 12 der Leiterelemente 3, 4 erzielt werden. Insbesondere ist je Leiterelementschicht 9, 10 und je Stirnende 7, 8 des Blechpakets 2 jeweils ein Teilwerkzeug vorgesehen, sodass im dargestellten Ausführungsbeispiel zwei konzentrisch ineinander gesetzte Teilwerkzeuge das erste Drehwerkzeug 30 definieren und zwei konzentrisch ineinander gesetzte Teilwerkzeuge das zweite Drehwerkzeug 31 definieren.

Nach Abschluss des Biegevorganges in Umfangsrichtung können die einzelnen Endbereiche 15 der einzelnen Leiterelemente 3, 4, welche einander zugewandt sind, miteinander verschweißt werden.

Fig. 3 zeigt das Blechpaket 2 mit den Leiterelementen 3, 4 in einer Draufsicht auf das erste Stirnende 7.

Fig. 4 zeigt eine Schnittdarstellung des Blechpakets 2 gemäß einer Schnittlinie IV - IV aus Fig. 3.

In den Figuren 3 und 4 ist der Umformvorgang bzw. die Vorrichtung 21 zum Biegen der Leiterelementüberstände 11, 12 der Leiterelemente 3, 4 in Radialrichtung 22 gezeigt.

Wie aus einer Zusammenschau der Fig. 3 und 4 ersichtlich, können die Leiterelementüberstände 11, 12 derart gebogen werden, dass ein Radius 32 der Biegung des Leiterelementes 3, 4 in etwa gleich groß ist wie ein Radius 33 jener Leiterelementschicht 9, 10 in welcher das Leiterelement 3, 4 angeordnet ist. Dadurch kann beim weiteren Biegen der Leiterelementüberstände 11, 12 in Umfangsrichtung eine Abscherung der Isolationsschicht 18 der Leiterelemente 3, 4 vermieden werden.

Wie besonders gut aus Fig. 4 ersichtlich, kann vorgesehen sein, dass nur das am weitesten innen liegende innere Leiterelement 3 bzw. das am weitest außen liegende äußere Leiterelement 4 von den Biegewerkzeugen 23, 24 berührt werden. Die zwischenliegenden Leiterelemente können zwischen dem inneren Leiterelement 3 und dem äußeren Leiterelement 4 geklemmt werden und durch die Klemmung mitgebogen werden. Somit ist es möglich, mehrere in einer Aufnahmenut 5 angeordneten Leiterelemente gleichzeitig zu biegen.

Wie aus Fig. 4 ersichtlich, kann vorgesehen sein, dass während dem radialen Biegevorgang zwischen die Leiterelementüberstände 11, 12 der einzelnen Leiterelemente 3, 4 Abstandhalter 34 eingebracht werden, durch welche die einzelnen Leiterelemente 3, 4 zueinander beabstandet werden.

Nach dem Beenden des Biegevorganges können die Abstandhalter 34 entfernt werden, wodurch zwischen den einzelnen Leiterelementen 3, 4 ein Luftspalt ausgebildet wird, mittels welchem vermieden werden kann, dass die einzelnen Leiterelemente 3, 4 während dem Biegen in Umfangsrichtung aneinander scheren.

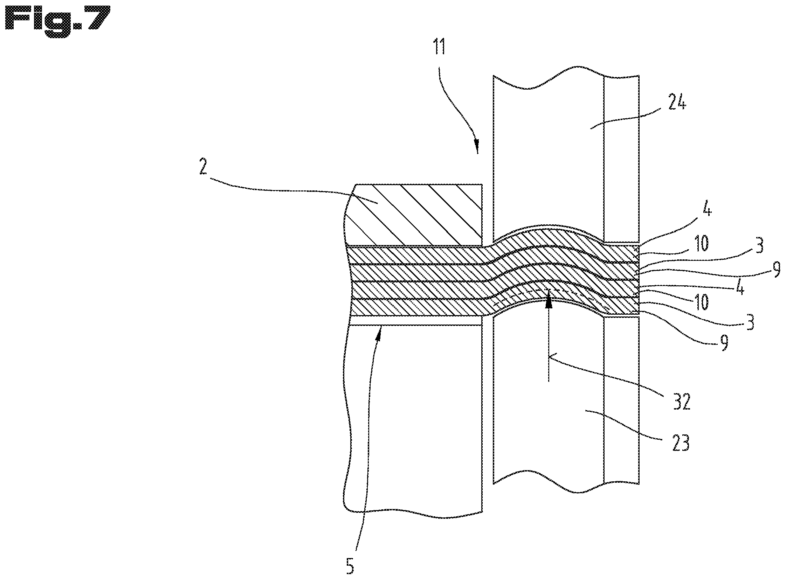

Wie aus Fig. 7 ersichtlich, können die Abstandhalter 34 auch weggelassen werden, sodass die Leiterelementüberstände 11, 12 der einzelnen Leiterelemente 3, 4 direkt aneinander anliegen.

Wie aus Fig. 7 weiters ersichtlich, können das innere Biegewerkzeug 23 und das äußere Biegewerkzeug 24 an dessen von der Aufnahmevorrichtung 25 entfernten Randbereich eine zur Hauptachse 6 parallele Oberfläche aufweisen. Mit andere Worten ausgedrückt können das innere Biegewerkzeug 23 und das äußere Biegewerkzeug 24 an dessen von der Aufnahmevorrichtung 25 entfernten Randbereich einen Abschnitt mit einer zylindrischen Oberfläche aufweisen. Dadurch können die Leiterelementüberstände 11, 12 in Radialrichtung 22 derart gebogen werden, dass nach Beendigung des Biegevorganges der Endbereich 15 der Leiterelementüberstände 11, 12 parallel zur Hauptachse 6 ausgerichtet ist. Dies bringt den Vorteil mit sich, dass der Endbereich 15 der Leiterelementüberstände 11, 12 beim nachfolgenden Biegen in Umfangsrichtung 16, 17 gut gegriffen werden können. Darüber hinaus können durch diese Maßnahme die Leiterelementüberstände 11, 12 beim nachfolgenden Schweißprozess exakt zueinander positioniert werden.

Eine derartige Ausbildung des inneren Biegewerkzeuges 23 und des äußeren Biegewerkzeuges 24 kann bei allen beschriebenen Ausführungsvarianten von Biegewerkzeugen 23, 24 vorgesehen sein.

Alternativ dazu kann auch vorgesehen sein, dass zusätzlich zum inneren Biegewerkzeug 23 und zum äußeren Biegewerkzeug 24 daran anschließende Biegewerkzeuge vorgesehen sind, welche einen derartigen zylindrischen Bereich aufweisen.

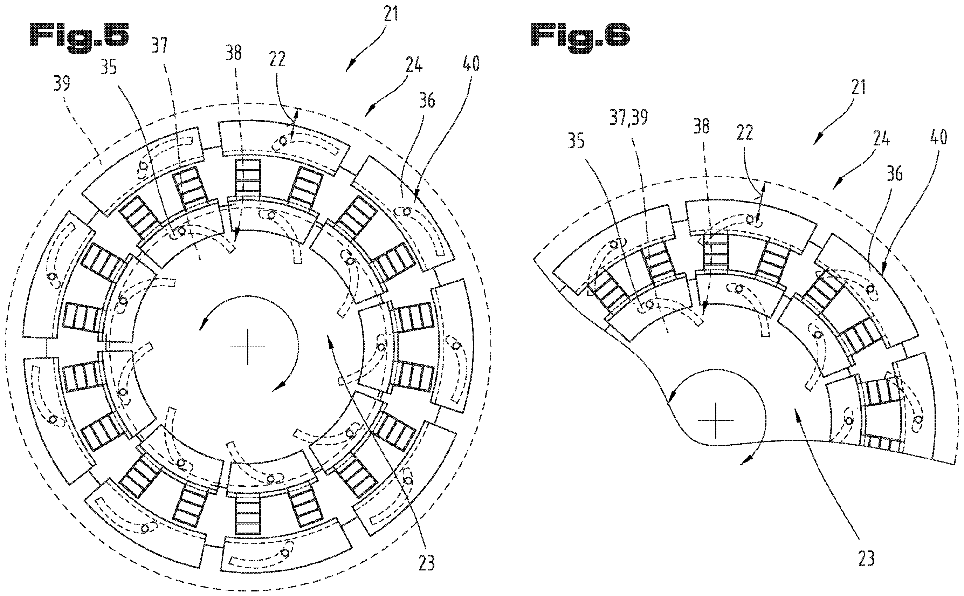

Fig. 5 zeigt eine weitere Ausführungsvariante der Vorrichtung 21 zum radialen Biegen der Leiterelementüberstände 11, 12 der einzelnen Leiterelemente 3, 4, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass das innere Biegewerkzeug 23 mehrere innere Biegewerkzeugsegmente 35 aufweist und das äußere Biegewerkzeug 24 mehrere äu-ßere Biegewerkzeugsegmente 36 aufweist. Die inneren Biegewerkzeugsegmente 35 bzw. die äußeren Biegewerkzeugsegmente 36 können in Radialrichtung verschoben werden, um die Leiterelementüberstände 11, 12 der einzelnen Leiterelemente 3, 4 biegen zu können. Insbesondere kann vorgesehen sein, dass zwischen den einzelnen Biegewerkzeugsegmenten 35 bzw. zwischen den einzelnen äußeren Biegewerkzeugsegmenten 36 ein Spalt ausgebildet ist, sodass die Biegewerkzeugsegmente 35, 36 in Radialrichtung 22 verschoben werden können. Weiters kann vorgesehen sein, dass die Biegewerkzeugsegmente 35 mittels einer Linearführung in Radialrichtung 22 verschiebbar geführt an der Vorrichtung 21 angeordnet sind.

Die inneren Biegewerkzeugsegmente 35 können mittels einer inneren Drehscheibe 37, welche eine innere Kulissenführung 38 aufweist, angesteuert werden. Durch Verdrehung der inneren Drehscheibe 37 können über die Kulissenführung die inneren Biegewerkzeugsegmente 35 in Radialrichtung 22 verschoben werden.

Analog dazu kann vorgesehen sein, dass die äußeren Biegewerkzeugsegmente 36 mittels einer äußeren Drehscheibe 39, welche eine äußere Kulissenführung 40 aufweist, verschoben werden.

Fig. 6 zeigt eine weitere Ausführungsvariante der Vorrichtung 21 zum Biegen der Leiterelementüberstände 11, 12 der einzelnen Leiterelemente 3, 4 in Radialrichtung 22, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In der weiteren Ausführungsvariante, wie sie in Fig. 6 dargestellt ist, können die innere Kulissenführung 38 und die äußere Kulissenführung 40 an einer gemeinsamen Drehscheibe 37, 39 angeordnet sein. Hierbei werden durch Verdrehung der gemeinsamen Drehscheibe 37, 39 die inneren Biegewerkzeugsegmente 35 und die äußeren Biegewerkzeugsegmente 36 synchron zueinander zugestellt.

Insbesondere kann vorgesehen sein, dass bei einer derartigen Ausführung mit einer gemeinsamen Drehscheibe 37, 39 die innere Kulissenführung 38 und die äußere Kulissenführung 40 gegengleich zueinander ausgebildet sind. Dadurch können bei Drehung der Drehscheibe 37, 39 in einer ersten Drehrichtung die inneren Biegewerkzeugsegmente 35 nach innen bewegt werden und die äußeren Biegewerkzeugsegmente 36 nach außen bewegt werden, wodurch die Biegewerkzeugsegmente 35, 36 voneinander wegbewegt werden. Bei Drehung der Drehscheibe 37, 39 in einer zweiten, entgegengesetzten, Drehrichtung können die inneren Biegewerkzeugsegmente 35 nach außen bewegt werden und die äußeren Biegewerkzeugsegmente 36 nach innen bewegt werden, wodurch die Biegewerkzeugsegmente 35, 36 aufeinander zubewegt werden.

Weiters kann vorgesehen sein, dass die inneren Biegewerkzeugsegmente 35 und die äußeren Biegewerkzeugsegmente 36 jeweils in einer Biegewerkzeugsegmentführung aufgenommen sind, in welcher sie in Radialrichtung 22 verschiebbar geführt sind.

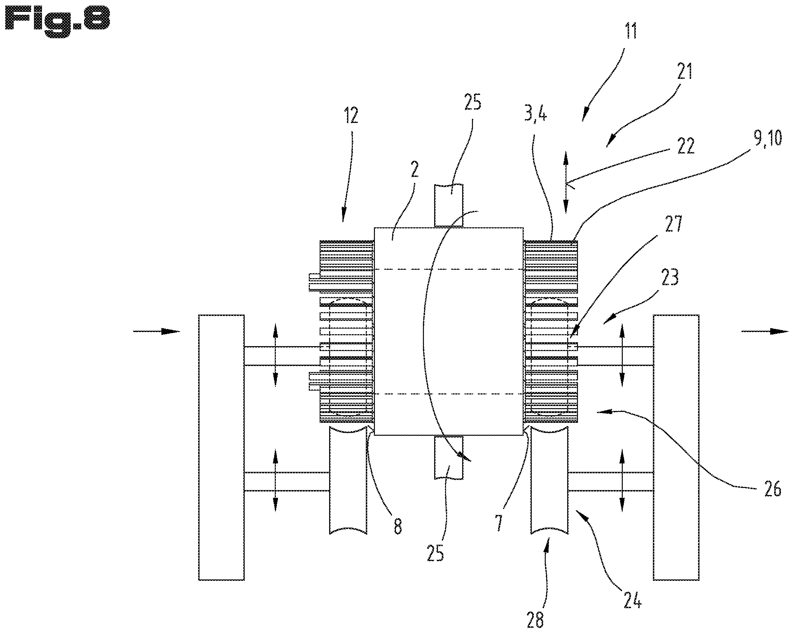

Fig. 8 zeigt ein weiteres Ausführungsbeispiel der Vorrichtung 21. Wie aus Fig. 8 ersichtlich, kann vorgesehen sein, dass die Vorrichtung 21 derart ausgebildet ist, dass die ersten Leiterelementüberstände 11 der Leiterelemente 3, 4 und die zweiten Leiterelementüberstände 11 der Leiterelemente 3, 4, welche an der gegenüberliegenden Seite des Stators 1 angeordnet sind, gleichzeitig gebogen werden. Hierzu kann vorgesehen sein, dass die Vorrichtung 21 zwei innere Biegewerkzeuge 23 und zwei äußere Biegewerkzeuge 24 aufweist. Die inneren Biegewerkzeuge 23 bzw. die äußeren Biegewerkzeuge 24 können hierbei, wie in den verschiedenen Ausführungsvarianten bereits beschrieben ausgebildet sein. Weiters kann die Aufnahmevorrichtung 25 als zentraler Klemmbacken ausgebildet sein, mittels welchem das Blechpaket 2 an dessen äußerer Mantelfläche gegriffen und dadurch gedreht werden kann. Alternativ dazu kann die Aufnahmevorrichtung 25 auch als Klemmrollenanordnung ausgebildet sein, welche an der äußeren Mantelfläche des Blechpakets 2 wirkt.

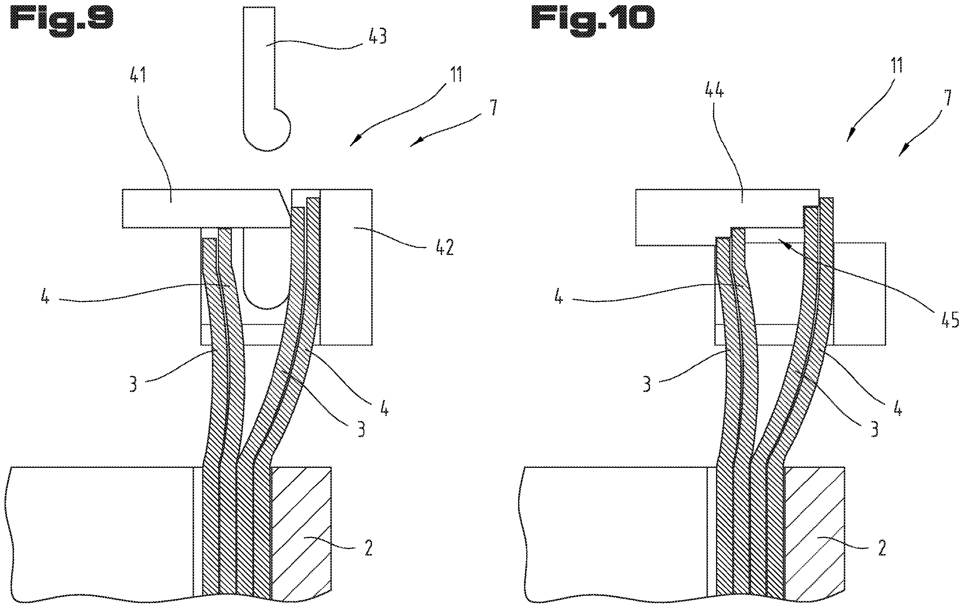

Fig. 9 zeigt eine schematische Darstellung des Auffächervorganges. Wie in Fig. 9 ersichtlich, kann vorgesehen sein, dass ein inneres Auffächerwerkzeug 41 ausgebildet ist, welches die Leiterelementüberstände 11, 12 der äußeren Leiterelemente 4 radial nach außen drückt. Weiters kann ein äußeres Auffächerwerkzeug 42 ausgebildet sein, welches als Gegenhalter dient. Das innere Auffächerwerkzeug 41 kann hierbei an einer Abstufung zur Anlage gebracht werden, welche aufgrund der unterschiedlichen Länge der Leiterelementüberstände 11, 12 der einzelnen Leiterelemente 3, 4 ausgebildet ist.

Das innere Auffächerwerkzeug 41 und das äußere Auffächerwerkzeug 42 können derart ausgebildet sein, dass die Leiterelementüberstände 11, 12 der einzelnen Leiterelemente 3, 4 in derselben Aufspannung des Blechpaketes 2 gebogen werden können, wie die radiale Verformung mittels dem inneren Biegewerkzeug 23 und dem äußeren Biegewerkzeug 24.

Weiters kann ein Spreitzwerkzeug 43 vorgesehen sein, welches nach dem Auffächern der einzelnen Leiterelemente 3, 4 in Axialrichtung des Blechpakets 2 zwischen die einzelnen Leiterelemente 3, 4 eingeschoben werden kann, um die Leiterelemente 3, 4 weiter umzuformen.

Fig. 9 zeigt eine schematische Darstellung des Endpositioniervorganges. Wie in Fig. 9 ersichtlich, kann vorgesehen sein, dass ein Endpositionierwerkzeug 44 ausgebildet ist, welches eine stufige Ausnehmung 45 aufweist. Die stufige Ausnehmung 45 kann hierbei die Kontur der fertig gebogenen Leiterelemente 3, 4 abbilden. Insbesondere können die einzelnen Stufen der stufigen Ausnehmung 45 derart ausgebildet sein, dass die einzelnen Leiterelemente 3, 4 daran in Anlage gebracht werden können und somit mittels dem Endpositionierwerkzeug 44 in Radialrichtung 22 und/oder in Axialrichtung endpositioniert werden können.

Insbesondere kann vorgesehen sein, dass die Leiterelemente 3, 4 mittels dem inneren Auffächerwerkzeug 41 paarweise vorpositioniert werden und mittels dem Endpositionierwerkzeug 44 alle der Leiterelemente 3, 4 zueinander beabstandet werden.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Stator | 31 | zweites Drehwerkzeug |
| 2 | Blechpaket | 32 | Radius Biegung |
| 3 | inneres Leiterelement | 33 | Radius Leiterelementschicht |
| 4 | äußeres Leiterelement | 34 | Abstandhalter |
| 5 | Aufnahmenut | 35 | innere Biegewerkzeugsegmente |
| 6 | Hauptachse | 36 | äußere Biegewerkzeugsegmente |
| 7 | erstes Stirnende | 37 | innere Drehscheibe |
| 8 | zweites Stirnende | 38 | innere Kulissenführung |
| 9 | erste Leiterelementschicht | 39 | äußere Drehscheibe |
| 10 | zweite Leiterelementschicht | 40 | äußere Kulissenführung |
| 11 | erster Leiterelementüberstand | 41 | inneres Auffächerwerkzeug |
| 12 | zweiter Leiterelementüberstand | 42 | äußeres Auffächerwerkzeug |
| 13 | B lechp aketstirnendbereich | 43 | Spreitzwerkzeug |
| 14 | Mittelbereich | 44 | Endpositionierwerkzeug |
| 15 | Endbereich | 45 | stufige Ausnehmung |
| 16 | erste Umfangsrichtung | | |
| 17 | zweite Umfangsrichtung | | |
| 18 | Isolationsschicht | | |
| 19 | Länge Leiterelement | | |
| 20 | Länge Blechpaket | | |
| 21 | Vorrichtung | | |
| 22 | Radialrichtung | | |
| 23 | inneres Biegewerkzeug | | |
| 24 | äußeres Biegewerkzeug | | |
| 25 | Aufnahmevorrichtung | | |
| 26 | Rollwerkzeug | | |
| 27 | Bombierung | | |
| 28 | Senke | | |
| 29 | Presswerkzeug | | |
| 30 | erstes Drehwerkzeug | | |

## Patentansprüche

1. Verfahren zur Herstellung eines Halbfabrikats eines Stators (1) oder Rotors einer elektrischen Maschine, wobei das Verfahren die folgenden Verfahrensschritte umfasst:
- Bereitstellen eines im Wesentlichen hohlzylindrischen oder zylindrischen Blechpakets (2), wobei das Blechpaket (2) eine Mehrzahl von in Umfangsrichtung verteilt angeordneten, sich zwischen einem ersten axialen Stirnende (7) und einem zweiten axialen Stirnende (8) des Blechpakets (2) erstreckenden Aufnahmenuten (5) aufweist;
- Bereitstellen einer Mehrzahl von stabförmigen oder spangenförmigen Leiterelementen (3, 4);
- Einsetzen der Leiterelemente (3, 4) in zumindest einzelne der Aufnahmenuten (5), wobei die Leiterelemente (3, 4) in zueinander beabstandeten Aufnahmenuten (5) in verschiedenen radialen Leiterelementschichten (9, 10) angeordnet werden und wobei die Leiterelemente (3, 4) derart in die Aufnahmenuten (5) eingesetzt werden, dass zumindest eines der axialen Stirnenden (7, 8) des Blechpakets (2) von Leiterelementüberständen (11, 12) der Leiterelemente (3, 4) in axialer Richtung überragt wird, wobei sich die Leiterelementüberstände (11, 12) von einem Blechpaketstirnendbereich (13) über einen Mittelbereich (14) zu einem Endbereich (15) erstrecken;
- Biegen der Leiterelementüberstände (11, 12) der Leiterelemente (3, 4) in Umfangsrichtung (16, 17), wobei die Leiterelementüberstände (11, 12) von Leiterelementen (3) einer ersten radialen Leiterelementschicht (9) in eine erste Umfangsrichtung (16) gebogen werden und Leiterelementüberstände (11, 12) von Leiterelementen (4) einer zweiten radialen Leiterelementschicht (10) in die entgegengesetzte zweite Umfangsrichtung (17) gebogen werden, sodass die Endbereiche (15) von Leiterelementen (3, 4), die in zueinander beabstandeten Aufnahmenuten (5) angeordnet sind und in zueinander benachbarten Leiterelementschichten (9, 10) liegen, zusammengeführt werden,
wobei
vor dem Biegen der Leiterelementüberstände (11, 12) der Leiterelemente (3, 4) in Umfangsrichtung (16, 17), die Leiterelementüberstände (11, 12) in Radialrichtung (22) gebogen werden,
**dadurch gekennzeichnet, dass** beim Biegen der Leiterelementüberstände (11, 12) in Radialrichtung (22) ein radial gesehen inneres Biegewerkzeug (23) gegen den Mittelbereich (14) des Leiterelementüberstandes (11, 12) radial nach außen drückt und gleichzeitig ein radial gesehen äußeres Biegewerkzeug (24) zumindest gegen den Endbereich (15) des Leiterelementes (4) radial nach innen drückt.

2. Verfahren nach Anspruch 1, **dadurch gekennzeichnet, dass** das innere Biegewerkzeug (23) und das äußere Biegewerkzeug (24) als Rollwerkzeug (26) ausgebildet sind, welche in einem Abrollvorgang zumindest einmal um den Umfang des Blechpakets (2) geführt werden.

3. Verfahren nach einem der vorhergehenden Ansprüche, **dadurch gekennzeichnet, dass** das innere Biegewerkzeug (23) und das äußere Biegewerkzeug (24) als in Umfangsrichtung segmentiertes Presswerkzeug (29) ausgebildet sind, welche in Radialrichtung (23) verschoben werden.

4. Verfahren nach einem der Ansprüche 1 bis 3, **dadurch gekennzeichnet, dass** das innere Biegewerkzeug (24) eine Bombierung (27) aufweist.

5. Verfahren nach Anspruch 4, **dadurch gekennzeichnet, dass** das äußere Biegewerkzeug (24) eine mit der Bombierung (27) korrespondierende Senke (28) aufweist.

6. Verfahren nach einem der Ansprüche 1 bis 5, **dadurch gekennzeichnet, dass** die Leiterelementüberstände (11, 12) in Radialrichtung (22) derart bauchig gebogen werden, dass die Leiterelementüberstände (11, 12) nach dem Biegevorgang einen Radius (32) aufweisen, der im Wesentlichen dem Radius (33) der jeweiligen Leiterelementschicht (9, 10) entspricht in der sie angeordnet sind.

7. Verfahren nach einem der vorhergehenden Ansprüche, **dadurch gekennzeichnet, dass** beim Biegen der Leiterelementüberstände (11, 12) in Radialrichtung (22) zwischen den einzelnen Leiterelementen (3, 4) aus unterschiedlichen radialen Leiterelementschichten (9, 10) Abstandhalter (34) angeordnet sind.

8. Verfahren nach einem der vorhergehenden Ansprüche, **dadurch gekennzeichnet, dass** das Biegen der Leiterelemente (3, 4) in Umfangsrichtung (16, 17) und ein Auffächern der Leiterelemente (3, 4) in einer Aufspannung erfolgt.

9. Verfahren nach Anspruch 8, **dadurch gekennzeichnet, dass** die Leiterelemente (3, 4) derart in das Blechpaket (2) eingesetzt werden, dass die Leiterelementüberstände (11, 12) der Leiterelemente (3) der ersten radialen Leiterelementschicht (9) eine geringere Erstreckung aufweisen, als die Leiterelementüberstände (11, 12) der Leiterelemente (4) der zweiten radialen Leiterelementschicht (10), wobei durch die Leiterelemente (3, 4) eine Abstufung ausgebildet ist, wobei beim Auffächern ein inneres Auffächerwerkzeug (41) an einem Absatz der Abstufung eingreift und gegen das äußere Leiterelement (3) gedrückt wird, wodurch dieses nach außen gedrückt wird.

10. Verfahren nach einem der vorhergehenden Ansprüche, **dadurch gekennzeichnet, dass** nach dem Biegen in Umfangsrichtung (16, 17) die Leiterelementüberstände (11, 12) der Leiterelemente (3, 4) in Radialrichtung (22) paarweise zusammengebogen werden.

11. Verfahren nach einem der vorhergehenden Ansprüche, **dadurch gekennzeichnet, dass** die Leiterelementüberstände (11, 12) in Radialrichtung (22) derart gebogen werden, dass nach Beendigung des Biegevorganges der Endbereich (15) der Leiterelementüberstände (11, 12) parallel zur Hauptachse (6) ausgerichtet ist.

12. Vorrichtung (21) zur Herstellung eines Halbfabrikats eines Stators (1) oder Rotors einer elektrischen Maschine mit einer Aufnahmevorrichtung (25) zur Aufnahme eines hohlzylindrischen oder zylindrischen Blechpakets (2) mit in Aufnahmenuten (5) des Blechpakets (2) angeordneten Leiterelementen (3, 4), welche Leiterelementüberstände (11, 12) aufweisen, wobei ein radial gesehen inneres Biegewerkzeug (23) und ein radial gesehen äußeres Biegewerkzeug (24) ausgebildet ist, wobei die Biegewerkzeuge (23, 24) zum Biegen der Leiterelementüberstände (11, 12) in Radialrichtung (22) ausgebildet sind, **dadurch gekennzeichnet, dass** das radial gesehen innere Biegewerkzeug (23) und das radial gesehen äußere Biegewerkzeug (24) derart ausgebildet sind, dass beim Biegen der Leiterelementüberstände (11, 12) in Radialrichtung (22) das radial gesehen innere Biegewerkzeug (23) gegen den Mittelbereich (14) des Leiterelementüberstandes (11, 12) radial nach außen drückt und gleichzeitig das radial gesehen äußeres Biegewerkzeug (24) zumindest gegen den Endbereich (15) des Leiterelementes (4) radial nach innen drückt.

13. Vorrichtung nach Anspruch 12, **dadurch gekennzeichnet, dass** das innere Biegewerkzeug (23) und das äußere Biegewerkzeug (24) als Rollwerkzeug (26) ausgebildet sind.

14. Vorrichtung nach Anspruch 12, **dadurch gekennzeichnet, dass** das innere Biegewerkzeug (23) und das äußere Biegewerkzeug (24) als in Umfangsrichtung segmentiertes Presswerkzeug (29) ausgebildet sind, welche in radialer Richtung verschiebbar sind.

15. Vorrichtung nach einem der Ansprüche 12 bis 14, **dadurch gekennzeichnet, dass** das innere Biegewerkzeug (23) und/oder das äußere Biegewerkzeug (24) an der Anlagefläche eine elastische Beschichtung aufweist.

## Claims

1. A method for producing a semi-finished product of a stator (1) or rotor of an electrical machine, wherein the method comprises the following method steps:
- providing an essentially hollow-cylindrical or cylindrical laminated core (2), wherein the laminated core (2) has a plurality of receiving grooves (5) distributed in a circumferential direction and extending between a first axial end face (7) and a second axial end face (8) of the laminated core (2);
- providing a plurality of rod-shaped or clasp-shaped conductor elements (3, 4);
- inserting the conductor elements (3, 4) into at least some of the receiving grooves (5), wherein the conductor elements (3, 4) are arranged in receiving grooves (5) spaced apart from one another in different radial conductor element layers (9, 10) and wherein the conductor elements (3, 4) are inserted into the receiving grooves (5) in such a way that conductor element overhangs (11 ,12) of the conductor elements (3, 4) protrude beyond at least one of the axial end faces (7, 8) of the laminated core (2) in the axial direction, wherein the conductor element overhangs (11, 12) extend from a laminated core end face region (13) to an end region (15) via a central region (14);
- bending the conductor element overhangs (11, 12) of the conductor elements (3, 4) in the circumferential direction (16, 17), wherein the conductor element overhangs (11, 12) of conductor elements (3) of a first radial conductor element layer (9) are bent into a first circumferential direction (16) and conductor element overhangs (11, 12) of conductor elements (4) of a second radial conductor element layer (10) are bent into the opposite second circumferential direction (17), such that the end regions (15) of conductor elements (3, 4) that are arranged in receiving grooves (5) spaced apart from one another and are located in conductor element layers (9, 10) adjacent to one another, are joined,
wherein
prior to bending the conductor element overhangs (11, 12) of the conductor elements (3, 4) in the circumferential direction (16, 17), the conductor element overhangs (11, 12) are bent in the radial direction (22),
**characterized in that** during bending of the conductor element overhangs (11, 12) in the radial direction (22), an - as radially seen - inner bending tool (23) presses radially outwards against the central region (14) of the conductor element overhang (11, 12) and, simultaneously, an - as radially seen - outer bending tool (24) presses radially inwards at least against the end region (15) of the conductor element (4).

2. The method according to claim 1, **characterized in that** the inner bending tool (23) and the outer bending tool (24) are configured as rolling tools (26), which are guided around the circumference of the laminated core (2) at least once in a rolling operation.

3. The method according to one of the preceding claims, **characterized in that** the inner bending tool (23) and the outer bending tool (24) are formed as a pressing tool (29) segmented in the circumferential direction, which are displaced in the radial direction (23).

4. The method according to one of claims 1 to 3, **characterized in that** the inner bending tool (24) comprises a camber (27).

5. The method according to claim 4, **characterized in that** the outer bending tool (24) comprises a depression (28) corresponding to the camber (27).

6. The method according to one of claims 1 to 5, **characterized in that** the conductor element overhangs (11, 12) are bent in a bulbous manner in the radial direction (22) such that the conductor element overhangs (11, 12) after the bending operation have a radius (32) essentially corresponding to the radius (33) of the respective conductor element layer (9, 10) in which they are arranged.

7. The method according to one of the preceding claims, **characterized in that** during bending of the conductor element overhangs (11, 12) in the radial direction (22), spacers (34) are arranged between the individual conductor elements (3, 4) of different radial conductor element layers (9, 10).

8. The method according to one of the preceding claims, **characterized in that** bending of the conductor elements (3, 4) in the circumferential direction (16, 17) and a fanning out of the conductor elements (3, 4) are carried out in one setting.

9. The method according to claim 8, **characterized in that** the conductor elements (3, 4) are inserted into the laminated core (2) such that the conductor element overhangs (11, 12) of the conductor elements (3) of the first radial conductor element layer (9) have a lower extension than conductor element overhangs (11, 12) of the conductor elements (4) of the second radial conductor element layer (10), wherein a graduation is formed by the conductor elements (3, 4), wherein, during fanning out, an inner fanning tool (41) engages on an offset of the graduation and is pressed against the outer conductor element (3), thereby pressing it outwards.

10. The method according to one of the preceding claims, **characterized in that** after bending in the circumferential direction (16, 17), the conductor element overhangs (11, 12) of the conductor elements (3, 4) are bent together in pairs in the radial direction (22).

11. The method according to one of the preceding claims, **characterized in that** the conductor element overhangs (11, 12) are bent such in the radial direction (22) that after termination of the bending operation the end region (15) of the conductor element overhangs (11, 12) is aligned in parallel to the main axis (6).

12. A device (21) for producing a semi-finished product of a stator (1) or rotor of an electrical machine having a receiving device (25) for receiving a hollow-cylindrical or cylindrical laminated core (2) having conductor elements (3, 4) which are arranged in receiving grooves (5) of the laminated core (2) and which comprise conductor element overhangs (11, 12), wherein an - as radially seen - inner bending tool (23) and an - as radially seen - outer bending tool (24) are formed, wherein the bending tools (23, 24) are formed for bending the conductor element overhangs (11, 12) in the radial direction (22), **characterized in that** the - as radially seen - inner bending tool (23) and the - as radially seen - outer bending tool (24) are formed such that during bending of the conductor element overhangs (11, 12) in the radial direction (22), the - as radially seen - inner bending tool (23) presses radially outwards against the central region (14) of the conductor element overhang (11, 12) and, simultaneously, the - as radially seen - outer bending tool (24) presses radially inwards at least against the end region (15) of the conductor element (4).

13. The device according to claim 12, **characterized in that** the inner bending tool (23) and the outer bending tool (24) are formed as rolling tools (26).

14. The device according to claim 12, **characterized in that** the inner bending tool (23) and the outer bending tool (24) are formed as a pressing tool (29) segmented in the circumferential direction, which are displaceable in the radial direction.

15. The device according to one of claims 12 to 14, **characterized in that** the inner bending tool (23) and/or the outer bending tool (24) comprises an elastic coating on the contact surface.

## Revendications

1. Procédé de fabrication d'un produit semi-fini de stator (1) ou de rotor d'un moteur électrique, dans lequel le procédé comprend les étapes suivantes :
- mise à disposition d'un empilage de tôles (2) globalement cylindrique creux ou cylindrique, dans lequel l'empilage de tôles (2) comprend une pluralité de rainures de logement (5) réparties sur la circonférence et s'étendant entre une première extrémité frontale axiale (7) et une deuxième extrémité frontale axiale (8) de l'empilage de tôles (2) ;
- mise à disposition d'une pluralité d'éléments conducteurs (3, 4) en forme de tiges ou d'agrafes ;
- insertion des éléments conducteurs (3, 4) dans au moins certaines des rainures de logement (5), dans lequel les éléments conducteurs (3, 4) dans des rainures de logement (5) distantes entre elles sont disposés dans différentes couches radiales d'éléments conducteurs (9, 10) et dans lequel au moins une des extrémités frontales axiale (7, 8) de l'empilage de tôles (2) est surmontée par des saillies d'éléments conducteurs (11, 12) des éléments conducteurs (3, 4) dans la direction radiale, dans lequel les saillies d'éléments conducteurs (11, 12) s'étendent d'une partie d'extrémité frontale d'empilage de tôles (13) vers une partie d'extrémité (15) en passant par une partie centrale (14) ;
- pliage des saillies d'éléments conducteurs (11, 12) des éléments conducteurs (3, 4) dans la direction circonférentielle (16, 17), dans lequel les saillies d'éléments conducteurs (11, 12) des éléments conducteurs (3) d'une première couche radiale d'éléments conducteurs (9) sont pliées dans une première direction circonférentielle (16) et les saillies d'éléments conducteurs (11, 12) des éléments conducteurs (4) d'une deuxième couche radiale d'éléments conducteurs (10) sont pliées dans la deuxième direction circonférentielle (17) opposée, de sorte que les parties d'extrémité (15) des éléments conducteurs (3, 4) qui sont disposés dans des rainures de logement (5) distantes entre elles et qui se trouvent dans des couches d'éléments conducteurs (9, 10) adjacentes entre elles, sont regroupées,
dans lequel
avant le pliage des saillies d'éléments conducteurs (11, 12) des éléments conducteurs (3, 4) dans la direction circonférentielle (16, 17), les saillies d'éléments conducteurs (11, 12) sont pliées dans la direction radiale (22),
**caractérisé en ce que**, lors du pliage des saillies d'éléments conducteurs (11, 12) dans la direction radiale (22), un outil de pliage radialement interne (23) s'appuie radialement vers l'extérieur contre la partie centrale (14) de la saillie d'élément conducteur (11, 12) et, simultanément, un outil de pliage radialement externe (24) s'appuie radialement vers l'intérieur au moins contre la partie d'extrémité (15) de l'élément conducteur (4).

2. Procédé selon la revendication 1, **caractérisé en ce que** l'outil de pliage interne (23) et l'outil de pliage externe (24) sont conçus comme des outils de roulage (26) qui sont guidés, dans un processus de roulage, au moins une fois autour de la circonférence de l'empilage de tôles (2).

3. Procédé selon l'une des revendications précédentes, **caractérisé en ce que** l'outil de pliage interne (23) et l'outil de pliage externe (24) sont conçus comme des outils de pression (29) segmentés dans la direction de la circonférence, qui sont déplacés dans la direction radiale (23).

4. Procédé selon l'une des revendications 1 à 3, **caractérisé en ce que** l'outil de pliage interne (24) présente un bombage (27).

5. Procédé selon la revendication 4, **caractérisé en ce que** l'outil de pliage externe (24) présente une dépression (28) correspondant au bombage (27).

6. Procédé selon l'une des revendications 1 à 5, **caractérisé en ce que** les saillies d'éléments conducteurs (11, 12) sont pliés de manière bombée dans la direction radiale (22) de sorte que les saillies d'éléments conducteurs (11, 12) présentent, après le processus de pliage, un rayon (32) qui correspond globalement au rayon (33) de la couche d'éléments conducteurs (9, 10) dans laquelle ils sont disposés.

7. Procédé selon l'une des revendications précédentes, **caractérisé en ce que**, lors du pliage des saillies d'éléments conducteurs (11, 12) dans la direction radiale (22), des entretoises (34) sont disposées entre les différents éléments conducteurs (3, 4) provenant de différentes couches radiales d'éléments conducteurs (9, 10).

8. Procédé selon l'une des revendications précédentes, **caractérisé en ce que** le pliage des éléments conducteurs (3, 4) a lieu dans la direction de la circonférence (16, 17) et un déploiement des éléments conducteurs (3, 4) a lieu dans un bridage.

9. Procédé selon la revendication 8, **caractérisé en ce que** les éléments conducteurs (3, 4) sont insérés dans l'empilage de tôles (2), de sorte que les saillies d'éléments conducteurs (11, 12) des éléments conducteurs (3) de la première couche radiale d'éléments conducteurs (9) présentent une extension moins grande que les saillies d'éléments conducteurs (11, 12) des éléments conducteurs (4) de la deuxième couche radiale d'éléments conducteurs (10), dans lequel, grâce aux éléments conducteurs (3, 4), un échelon est réalisé, dans lequel, lors du déploiement, un outil de déploiement (41) s'emboîte au niveau d'un épaulement d'échelon et est comprimé contre l'élément conducteur externe (3), ce qui permet de comprimer celui-ci vers l'extérieur.

10. Procédé selon l'une des revendications précédentes, **caractérisé en ce que**, après le pliage dans la direction de la circonférence (16, 17), les saillies d'éléments conducteurs (11, 12) des éléments conducteurs (3, 4) sont pliés conjointement par paires dans la direction radiale (22).

11. Procédé selon l'une des revendications précédentes, **caractérisé en ce que** les saillies d'éléments conducteurs (11, 12) sont pliées dans la direction radiale (22) de sorte que, après la fin du processus de pliage, la partie d'extrémité (15) des saillies d'éléments conducteurs (11, 12) est orientée parallèlement à l'axe principal (6).

12. Dispositif (21) pour la fabrication d'un produit semi-fini de stator (1) ou de rotor d'un moteur électrique, avec un dispositif de logement (25) pour le logement d'un empilage de tôles (2) cylindrique creux ou cylindrique, avec des éléments conducteurs (3, 4), disposés dans des rainures de logement (5) de l'empilage de tôle (2), qui comprennent des saillies d'éléments conducteurs (11, 12), dans lequel un outil de pliage radialement interne (23) et un outil de pliage radialement externe (24) sont prévus, dans lequel les outils de pliage (23, 24) sont conçus pour le pliage des saillies d'éléments conducteurs (11, 12) dans la direction radiale (22), **caractérisé en ce que** l'outil de pliage radialement interne (23) et l'outil de pliage radialement externe (24) sont conçus de sorte que, lors du pliage des saillies d'éléments conducteurs (11, 12) dans la direction radiale (22), l'outil de pliage radialement interne (23) s'appuie radialement vers l'extérieur contre la partie centrale (14) de la saillie d'élément conducteur (11, 12) et, simultanément, l'outil de pliage radialement externe (24) s'appuie radialement vers l'intérieur au moins contre la partie d'extrémité (15) de l'élément conducteur (4).

13. Dispositif selon la revendication 12, **caractérisé en ce que** l'outil de pliage interne (23) et l'outil de pliage externe (24) sont conçus comme des outils de roulage (26).

14. Dispositif selon la revendication 12, **caractérisé en ce que** l'outil de pliage interne (23) et l'outil de pliage externe (24) sont conçus comme des outils de pressage (29) segmentés dans la direction de la circonférence, qui peuvent être déplacés dans la direction radiale.

15. Dispositif selon l'une des revendications 12 à 14, **caractérisé en ce que** l'outil de pliage interne (23) et/ou l'outil de pliage externe (24) présente, au niveau de la surface d'appui, un revêtement élastique.
